# EUROPEAN PATENT SPECIFICATION

(11) **EP 2 847 819 B1**
(45) Date of publication and mention of the grant of the patent: **15.06.2016**
(21) Application number: 13722127.1
(22) Date of filing: 18.04.2013
(51) Int. Cl.: H01M 8/24

(54) **FUEL CELL SYSTEM**
BRENNSTOFFZELLENSYSTEM
SYSTÈME DE PILES À COMBUSTIBLE

(30) Priority: 10.05.2012 JP 2012108764
(43) Date of publication of application: 18.03.2015
(73) Proprietor: Honda Motor Co., Ltd., Tokyo 1078556 (JP)
(72) Inventor: YOSHIMINE, Yuki, Wako-shi Saitama 351-0193 (JP); OGAWA, Tetsuya, Wako-shi Saitama 351-0193 (JP)
(74) Representative: Weickmann & Weickmann PartmbB
(86) International application number: PCT/JP2013/062142
(87) International publication number: WO 2013/168577

(56) References cited:
- WO-A1-01/91243
- WO-A1-2011/132488
- US-A1- 2008 182 151
- US-A1- 2011 232 957

## Description

### Technical Field

The present invention relates to a fuel cell system including a fuel cell module, a fuel gas supply apparatus, an oxygen-containing gas supply apparatus, a water supply apparatus, a power converter, a control device, and a casing containing the fuel cell module, the fuel gas supply apparatus, the oxygen-containing gas supply apparatus, the water supply apparatus, the power converter, and the control device.

### Background Art

Typically, a solid oxide fuel cell (SOFC) employs a solid electrolyte of ion-conductive oxide such as stabilized zirconia. The electrolyte is interposed between an anode and a cathode to form an electrolyte electrode assembly, for example, a membrane electrode assembly (MEA). The electrolyte electrode assembly is sandwiched between separators (bipolar plates). In use, normally, predetermined numbers of the electrolyte electrode assemblies and the separators are stacked together to form a fuel cell stack.

As the fuel gas supplied to the fuel cell, normally, a hydrogen gas generated from hydrocarbon based raw material by a reformer is used. In general, in the reformer, a reformed raw material gas is obtained from hydrocarbon based raw material of a fossil fuel or the like, such as methane or LNG, and thereafter, the reformed raw material gas undergoes steam reforming, partial oxidation reforming, or autothermal reforming to produce a reformed gas (fuel gas).

In this regard, a fuel cell system (fuel cell power supply apparatus) having a single unit case containing a fuel cell, a reformer, a power converter for converting direct current power generated in the fuel cell according to a power supply output specification, a control device, and auxiliary (accessary) devices is known.

In the fuel cell system of this type, mostly, the space for providing the system is very small, and the dedicated space for operation such as maintenance is required. Therefore, it is desired that the performance of maintenance operation is improved while making it possible to provide the system in a relatively small space efficiently. For example, a co-generation system as disclosed in Japanese Laid-Open Patent Publication No. 2007-139291 (hereinafter referred to as conventional technique 1) is known.

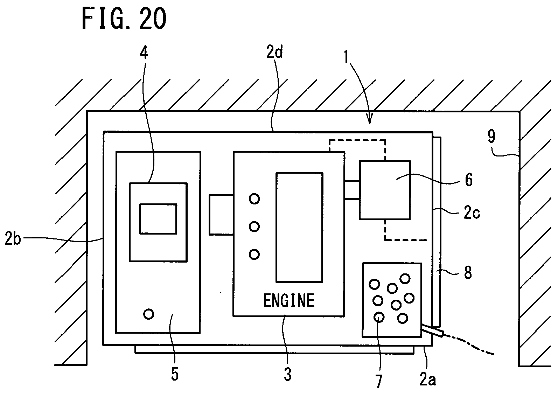

As shown in FIG. 20, this system includes a housing 1. The housing 1 has a box shape including a front plate 2a, a left side plate 2b, a right side plate 2c, and a back plate 2d.

In the housing 1, a gas engine 3 is provided at substantially the center, and an air cleaner 4 and an oil tank 5 are provided on one side of the gas engine 3 (adjacent to the left side plate 2b). A heat exchanger 6 and a drain neutralization device 7 are provided on the other side of the gas engine 3 (adjacent to the right side plate 2c).

The right side plate 2c has a maintenance opening 8. Though not shown, a gas connecting portion, an electric cable connecting portion, and a hot water pipe connecting portion are locally provided on one side to face the maintenance opening 8.

### Summary of Invention

In the conventional technique 1, a large number of electric cables such as connection cables to a system power supply and cables for supplying electricity to a hot water supply unit, cables for communicating control signals with the hot water supply unit, and sensor cables protrude from the housing 1 to the outside. The electric cables protrude from different positions toward different directions, depending on the conditions where devices are provided. Therefore, a relatively large space for arranging cables is required between the housing 1 and a wall surface 9.

That is, in the case of turning the electric cable protruding from the housing 1 at a relatively large angle, a relatively large space is required for protection of the electric cable. Therefore, the housing 1 cannot be provided efficiently in a small space. It is difficult to determine the layout for providing the system, and the system cannot be used in a wide range of applications.

The present invention has been made to solve the problem of this type, and an object of the present invention is to provide a fuel cell system having simple and compact structure in which the layout for providing the fuel cell system can be determined freely, and cables and pipes can be arranged in a small space suitably.

The present invention relates to a fuel cell system including a fuel cell module for generating electrical power by electrochemical reactions of a fuel gas and an oxygen-containing gas, a fuel gas supply apparatus for supplying the fuel gas to the fuel cell module, an oxygen-containing gas supply apparatus for supplying the oxygen-containing gas to the fuel cell module, a water supply apparatus for supplying water to the fuel cell module, a power converter for converting direct current power generated in the fuel cell module to electrical power according to requirements specification, a control device for controlling an amount of electrical power generated in the fuel cell module, and a casing containing the fuel cell module, the fuel gas supply apparatus, the oxygen-containing gas supply apparatus, the water supply apparatus, the power converter, and the control device.

In this fuel cell system, the casing has at least a first outlet surface and a second outlet surface which are bent inward from an outer surface of the casing to form a recess such that a predetermined angle is formed at a borderline between the first outlet surface and the second outlet surface. Further, the first outlet surface and the second outlet surface have a first outlet port and a second outlet port for allowing a power cable for supplying electrical power according to requirements specification to outside or a fuel gas pipe for supplying the fuel gas to the fuel gas supply apparatus to protrude toward outside of the casing.

In the present invention, the first outlet surface and the second outlet surface are bent inwardly from the outer surface of the casing to form a recess. The first outlet ports and the second outlet ports which are formed in the first outlet surface and the second outlet surface are oriented in different directions toward the outside of the casing. In the structure, for a given power cable or fuel gas pipe, any of the first outlet ports and the second outlet ports can be selected, such that the selected first outlet port or the second outlet port is oriented in a direction which allows the power cable or the fuel gas pipe to be taken out of the casing easily requiring only a small space outside the casing.

Therefore, the power cable or the fuel gas pipe is not curved at a large angle outside the casing, and it becomes possible to minimize the space between the casing and the wall surface. Thus, the casing can be provided efficiently along the wall surface. With the simple and compact structure, the layout for providing the system can be determined freely, and the cables and pipes can be arranged in a small space suitably.

### Brief Description of Drawings

FIG. 1 is a perspective view schematically showing a fuel cell system according to a first embodiment of the present invention;
FIG. 2 is a plan view showing the fuel cell system;
FIG. 3 is a front view showing the fuel cell system;
FIG. 4 is a circuit diagram showing the fuel cell system;
FIG. 5 is a perspective view schematically showing the fuel cell system as viewed from a back surface side;
FIG. 6 is a perspective view showing a cable outlet panel of the fuel cell system;
FIG. 7 is a perspective view showing the cable outlet panel as viewed from the back surface side;
FIG. 8 is a cross sectional view showing a cable outlet of the fuel cell system;
FIG. 9 is a perspective view showing a fuel cell system according to a second embodiment of the present invention, as viewed from a back surface side;
FIG. 10 is a front view showing a cable outlet panel of a fuel cell system according to a third embodiment of the present invention;
FIG. 11 is a front view showing a cable outlet panel of a fuel cell system according to a fourth embodiment of the present invention;
FIG. 12 is a perspective view showing a fuel cell system according to a fifth embodiment of the present invention, as viewed from a back surface side;
FIG. 13 is a plan view showing the fuel cell system;
FIG. 14 is a partial perspective view showing the fuel cell system, as viewed from the back surface side;
FIG. 15 is a perspective view schematically showing a fuel cell system according to a sixth embodiment of the present invention;
FIG. 16 is a plan view showing the fuel cell system;
FIG. 17 is a front view showing the fuel cell system;
FIG. 18 is a perspective view schematically showing a fuel cell system according to a seventh embodiment of the present invention;
FIG. 19 is a plan view schematically showing the fuel cell system; and
FIG. 20 is a perspective view schematically showing a co-generation system described in the conventional technique 1.

### Description of Embodiments

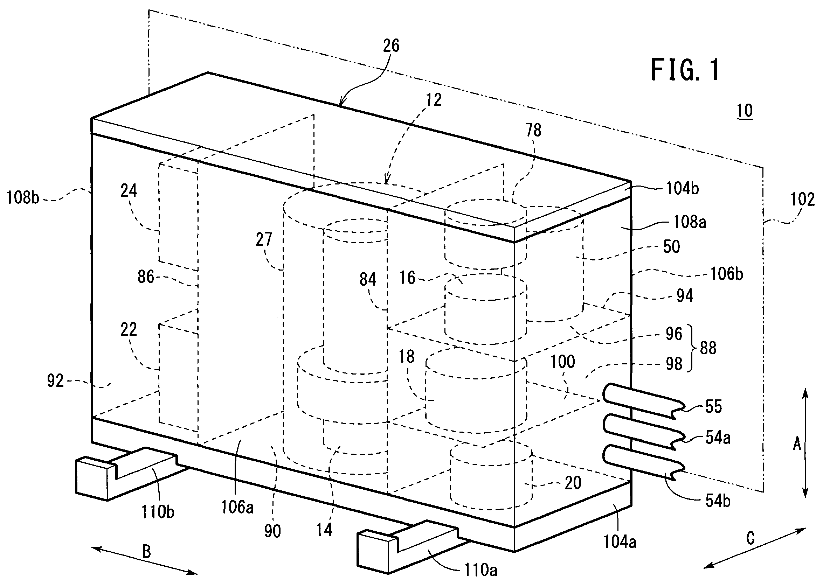

A fuel cell system 10 according to a first embodiment of the present invention shown in FIGS. 1 to 4 is used in various applications, including stationary and mobile applications. For example, the fuel cell system 10 is mounted on a vehicle.

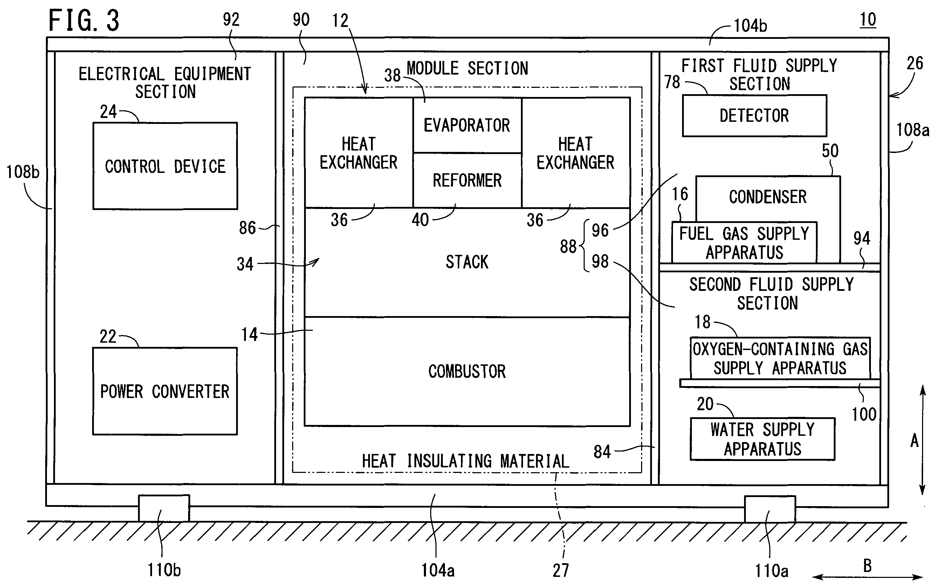

The fuel cell system 10 includes a fuel cell module 12 for generating electrical energy in power generation by electrochemical reactions of a fuel gas (hydrogen gas) and an oxygen-containing gas (air), a combustor 14 for raising the temperature of the fuel cell module 12, a fuel gas supply apparatus (including a fuel gas pump) 16 for supplying the fuel gas to the fuel cell module 12, an oxygen-containing gas supply apparatus (including an air pump) 18 for supplying an oxygen-containing gas to the fuel cell module 12, a water supply apparatus (including a water pump) 20 for supplying water to the fuel cell module 12, a power converter 22 for converting the direct current power generated in the fuel cell module 12 to electrical power according to the requirements specification, and a control device 24 for controlling the amount of electrical power generated in the fuel cell module 12. The fuel cell module 12, the combustor 14, the fuel gas supply apparatus 16, the oxygen-containing gas supply apparatus 18, the water supply apparatus 20, the power converter 22, and the control device 24 are disposed in a single casing 26. The fuel cell module 12 and the combustor 14 are surrounded by heat insulating material 27 (see FIG. 3).

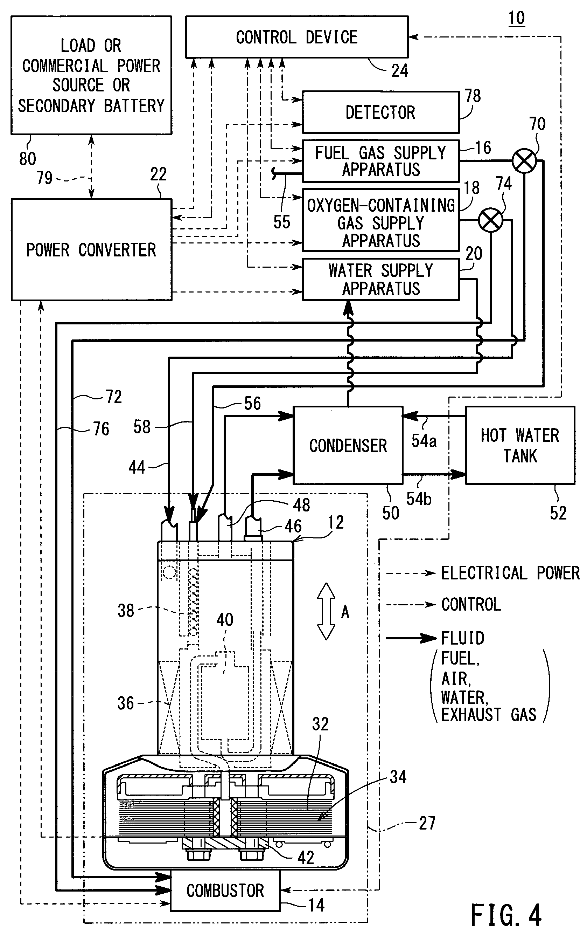

As shown in FIG. 4, the fuel cell module 12 includes a fuel cell stack 34 formed by stacking a plurality of solid oxide fuel cells 32 in a vertical direction. The fuel cells 32 are formed by stacking electrolyte electrode assemblies and separators. Though not shown, each of the electrolyte electrode assemblies includes a cathode, an anode, and a solid electrolyte (solid oxide) interposed between the cathode and the anode. For example, the electrolyte is made of ion-conductive solid oxide such as stabilized zirconia.

As shown in FIG. 3, at an upper end of the fuel cell stack 34 in the stacking direction, a heat exchanger 36 for heating the oxygen-containing gas before the oxygen-containing gas is supplied to the fuel cell stack 34, an evaporator 38 for evaporating water to produce a mixed fuel of water vapor and a raw fuel (e.g., city gas) chiefly containing hydrocarbon, and a reformer 40 for reforming the mixed fuel to produce a reformed gas are provided.

At a lower end of the fuel cell stack 34 in the stacking direction, a load applying mechanism 42 for applying a tightening load to the fuel cells 32 of the fuel cell stack 34 in the direction indicated by the arrow A is provided (see FIG. 4).

The reformer 40 is a preliminary reformer for reforming higher hydrocarbon (C₂₊) such as ethane (C₂H₆), propane (C₃H₈), and butane (C₄H₁₀) in the city gas by steam reforming. The operating temperature of the reformer 40 is several hundred °C.

The operating temperature of the fuel cell 32 is high, at several hundred °C. In the electrolyte electrode assembly, methane in the fuel gas is reformed to obtain hydrogen, and the hydrogen is supplied to the anode.

As shown in FIG. 4, at the heat exchanger 36, a partially consumed reactant gas discharged from the fuel cell stack 34 (hereinafter also referred to as the exhaust gas or the combustion exhaust gas) and the air as heated fluid supplied from an air supply pipe 44 flow in a counterflow manner. After the exhaust gas flows through the heat exchanger 36, the exhaust gas is supplied to the evaporator 38 as a heat source for evaporating water. Then, the exhaust gas is discharged into a main exhaust pipe 46. Some of the exhaust gas heats the reformer 40, and then, the exhaust gas is discharged into an exhaust pipe 48.

A condenser 50 is connected to the main exhaust pipe 46 and the exhaust pipe 48. By heat exchange between the exhaust gas discharged from the fuel cell module 12 and the coolant, the condenser 50 condenses and collects the water vapor in the exhaust gas, and then, the condenser 50 supplies the condensed water to the water supply apparatus 20. As the coolant, for example, hot water stored in a hot water tank 52 is used.

The hot water tank 52 is provided outside the casing 26. The hot water tank 52 is connected to the condenser 50 through a coolant supply pipe 54a and a coolant discharge pipe 54b. While the hot water flows through the coolant supply pipe 54a, the hot water in the hot water tank 52 is heated by heat exchange with the exhaust gas, and the heated hot water is returned to the hot water tank 52 through the coolant discharge pipe 54b.

As shown in FIG. 4, the fuel gas supply apparatus 16 is connected to a raw fuel supply source (not shown) provided outside the casing 26 through a raw fuel pipe 55. The fuel gas supply apparatus 16 is connected to a raw fuel channel 56. A raw fuel branch channel 72 is connected to some point in the raw fuel channel 56 through a switching valve 70. The raw fuel branch channel 72 is connected to the combustor 14.

The oxygen-containing gas supply apparatus 18 is connected to the air supply pipe 44, and an air branch channel 76 is connected to a switching valve 74 provided at some point in the air supply pipe 44. The air branch channel 76 is connected to the combustor 14. For example, the combustor 14 has a burner, and as described above, the raw fuel and the air are supplied to the combustor 14. Instead of the burner, other means (e.g., electric heater) may be adopted. In this case, the raw fuel, the air, and electrical power (electrical energy) should be supplied selectively as necessary.

A water channel 58 is connected to the water supply apparatus 20. The fuel gas supply apparatus 16, the oxygen-containing gas supply apparatus 18, and the water supply apparatus 20 are controlled by the control device 24. A detector 78 for detecting the fuel gas is electrically connected to the control device 24. For example, a commercial power source 80 (or other components such as a load or a secondary battery) is connected to the power converter 22 through a power cable 79.

As shown in FIGS. 1 to 3, the casing 26 has a rectangular shape elongated in a direction indicated by an arrow B as a whole. In the casing 26, a first vertical partition plate (partition member) 84 and a second vertical partition plate (partition member) 86 are provided upright at predetermined intervals for dividing the space in the casing 26 in a horizontal direction indicated by the arrow B. The space in the casing 26 is divided into a fluid supply section 88, a module section 90, and an electrical equipment section 92 by the first vertical partition plate 84 and the second vertical partition plate 86. The module section 90 is interposed between the fluid supply section 88 and the electrical equipment section 92.

The fluid supply section 88 is divided into a first supply section 96 at an upper position and a second supply section 98 at a lower position by a lateral partition plate 94. The condenser 50, the fuel gas supply apparatus 16, and the detector 78 are placed in the first supply section 96. The detector 78 is provided above the fuel gas supply apparatus 16. The oxygen-containing gas supply apparatus 18 and the water supply apparatus 20 are placed in the second supply section 98. The water supply apparatus 20 is provided at the bottom of the fluid supply section 88. The oxygen-containing gas supply apparatus 18 is held on a table 100 in the second supply section 98.

As shown in FIGS. 1 and 3, the fuel cell module 12 and the combustor 14 are placed in the module section 90. The fuel cell module 12 is provided above the combustor 14. The power converter 22 and the control device 24 are provided in the electrical equipment section 92.

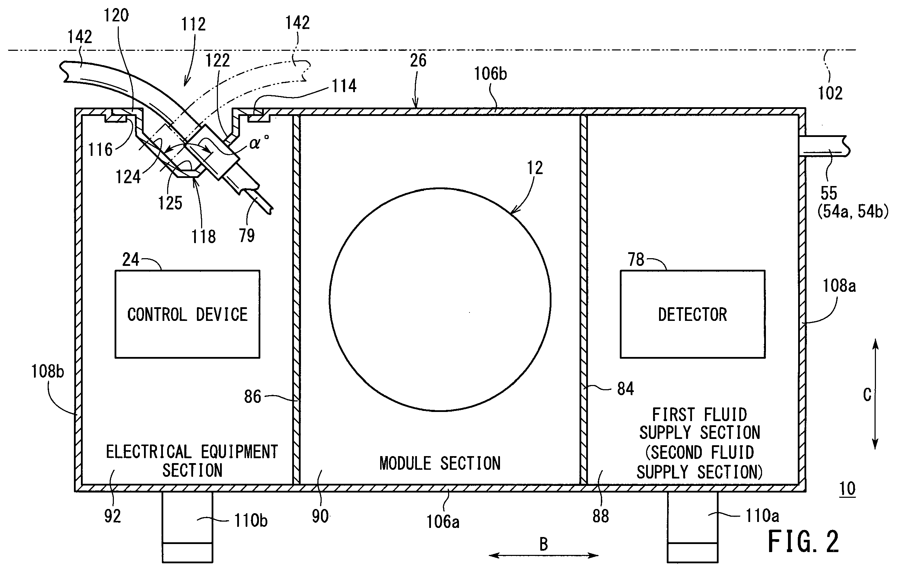

As shown in FIGS. 1 and 2, the casing 26 is elongated in a lateral direction indicated by the arrow B in which the fluid supply section 88, the module section 90, and the electrical equipment section 92 are arranged, and the dimension in the depth direction indicated by the arrow C intersecting with the lateral direction is reduced. The back surface in the depth direction is placed along a wall surface 102.

The casing 26 includes a rectangular bottom plate 104a and a top plate 104b. A front plate 106a and a back plate 106b are provided on long sides of the bottom plate 104a and the top plate 104b. A right side plate 108a and a left side plate 108b are provided on short sides of the bottom plate 104a and the top plate 104b. For ease of maintenance operation or the like, the front plate 106a may have openable doors (not shown). Likewise, the right side plate 108a and the left side plate 108b may have openable doors. Further, as necessary, guide members such as a pair of slide rails 110a, 110b may be provided to allow the casing 26 to be movable back and forth in the direction indicated by the arrow C.

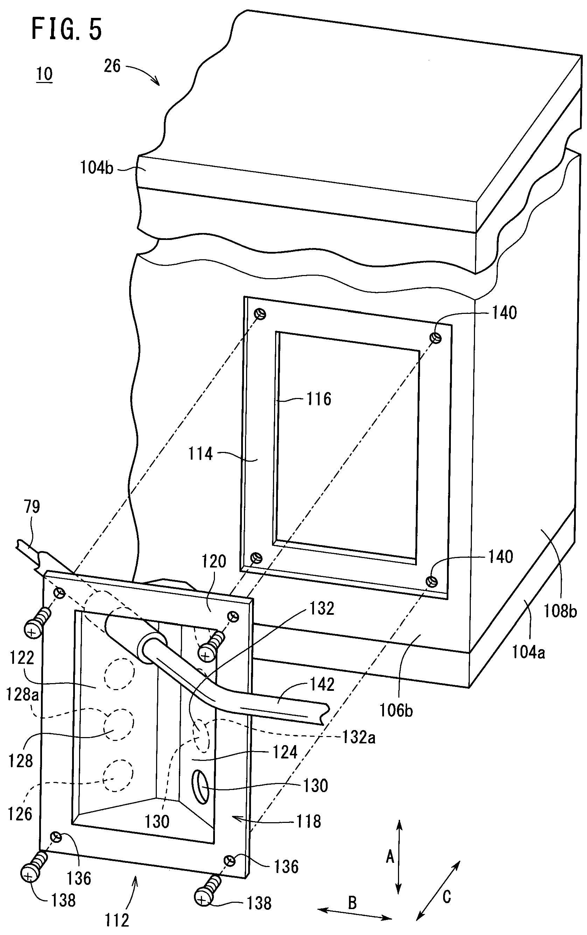

As shown in FIGS. 2 and 5, the casing 26 has a cable outlet 112 on a lower part of the back plate 106b, adjacent to a corner close to the left side plate 108b. The back plate 106b is bent inward along a step 114 to form a recess, and an opening 116 is formed inside the step 114. A cable outlet panel 118 of the cable outlet 112 is attached to the opening 116.

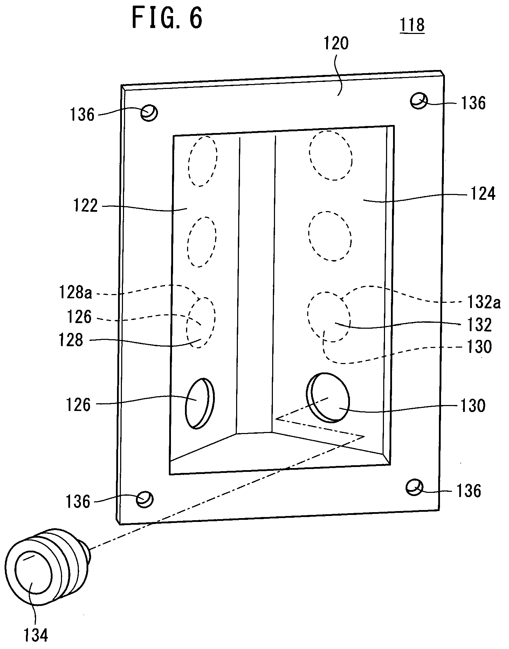

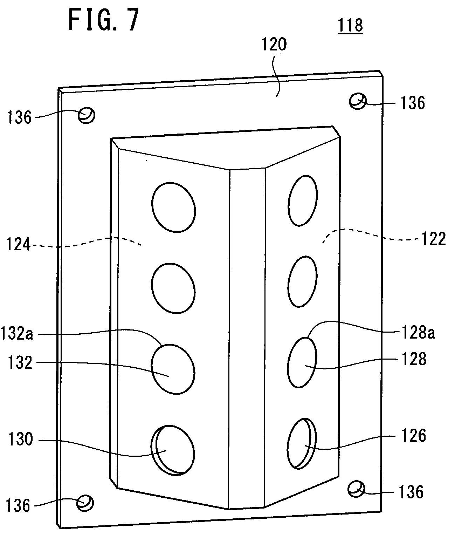

As shown in FIGS. 2 and FIGS. 5 to 7, the cable outlet panel 118 includes an attachment plate 120 as an outer frame. A first outlet surface 122 and a second outlet surface 124 are formed integrally with the attachment plate 120, and surrounded by the attachment plate 120.

The first outlet surface 122 and the second outlet surface 124 are provided inside the opening 116 of the casing 26, and bent from the outer surface of the casing 26 inward to form a recess. A predetermined angle α° is formed at a borderline 125 between the first outlet surface 122 and the second outlet surface 124 (see FIG. 2). The first outlet surface 122 and the second outlet surface 124 have a V-shape in a plan view of the casing 26 (see FIG. 2).

A predetermined number of first outlet ports 126 for allowing the power cable 79 to protrude to the outside of the casing 26 are formed in the first outlet surface 122. Circular disk shaped cover plates 128 are provided at the first outlet ports 126, respectively. The cover plates 128 are thinner than the first outlet surface 122, and have breakable positions 128a. The cover plates 128 can be removed easily from the first outlet ports 126 at the breakable positions 128a.

Likewise, a predetermined number of second outlet ports 130 for allowing the power cable 79 to protrude to the outside are formed on the second outlet surface 124. Cover plates 132 are provided at the second outlet ports 130, respectively. The cover plates 132 are thinner than the second outlet surface 124, and have breakable positions 132a. The cover plates 132 can be removed easily from the second outlet ports 130 at the breakable positions 132a.

In the case where the cover plates 128, 132 have been removed from the first outlet ports 126 and the second outlet ports 130, but if the first outlet ports 126 and the second outlet ports 130 are not used for taking the power cable 79 out of the casing 26, for example, grommets 134 are attached to the first outlet ports 126 and the second outlet ports 130.

A plurality of holes 136 are formed in the attachment plate 120 of the cable outlet panel 118. As shown in FIG. 5, screws 138 inserted into the holes 136 are screwed into screw holes 140 formed in the step 114 of the back plate 106b. In this manner, the cable outlet panel 118 is attached to the step 114.

On the cable outlet panel 118, an outer cable 142 containing the power cable 79 is inserted into any of the first outlet ports 126 of the first outlet surface 122. The outer cable 142 is taken out of the casing 26.

Operation of the fuel cell system 10 will be described below.

As shown in FIG. 4, by operation of the fuel gas supply apparatus 16, for example, a raw fuel such as the city gas (including CH₄ , C₂H₆, C₃H₈ , C₄H₁₀) is supplied to the raw fuel channel 56. Further, by operation of the water supply apparatus 20, water is supplied to the water channel 58, and the oxygen-containing gas such as air is supplied to the air supply pipe 44 through the oxygen-containing gas supply apparatus 18.

In the evaporator 38, the raw fuel flowing through the raw fuel channel 56 is mixed with the water vapor, and a mixed fuel is obtained. The mixed fuel is supplied to the reformer 40. The mixed fuel undergoes steam reforming in the reformer 40. Thus, hydrocarbon of C₂₊ is removed (reformed), and a reformed gas (fuel gas) chiefly containing methane is obtained. The reformed gas is supplied to the fuel cell stack 34. Thus, the methane in the reformed gas is reformed, and the hydrogen gas is obtained. The fuel gas chiefly containing the hydrogen gas is supplied to the anodes (not shown).

The air supplied from the air supply pipe 44 to the heat exchanger 36 moves along the heat exchanger 36, and preheated to a predetermined temperature by heat exchange with the exhaust gas as described later. The air heated by the heat exchanger 36 is supplied to the cathodes (not shown).

Thus, in each of the electrolyte electrode assemblies, by electrochemical reactions of the fuel gas and the air, power generation is performed. The hot exhaust gas (several hundred °C) discharged to the outer circumferential region of each of the electrolyte electrode assemblies flows through the heat exchanger 36, and heat exchange with air is carried out. The air is heated to a predetermined temperature, and the temperature of the exhaust gas is decreased.

When the exhaust gas moves along the evaporator 38, the water passing through the water channel 58 is evaporated. After the exhaust gas passes through the evaporator 38, the exhaust gas is supplied to the condenser 50 through the main exhaust pipe 46. The hot water in the hot water tank 52 is supplied to the condenser 50 through the coolant supply pipe 54a, and the hot water is heated by heat exchange with the exhaust gas. The heated hot water is returned to the hot water tank 52 through the coolant discharge pipe 54b. Therefore, for example, the hot water tank 52 is used, as a water heater for home use.

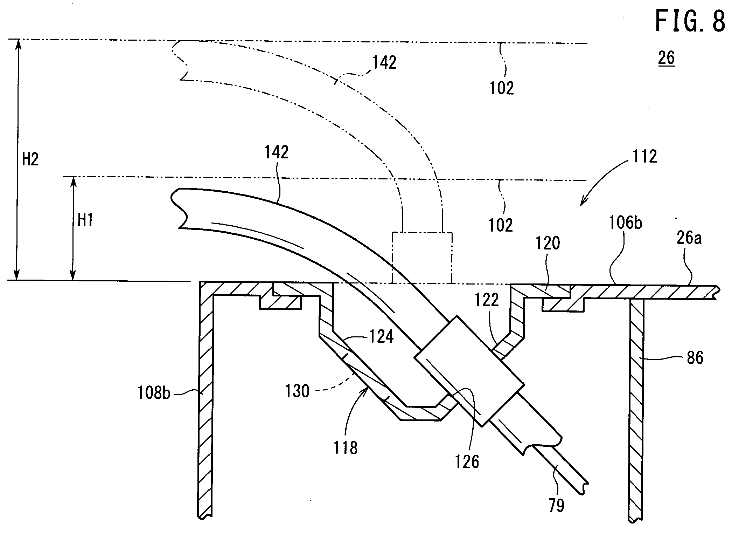

In the first embodiment, as shown in FIG. 8, the cable outlet 112 has the cable outlet panel 118, and the cable outlet panel 118 has the first outlet surface 122 and the second outlet surface 124 bent from an outer surface 26a of the casing 26 inward to form the recess.

The first outlet surface 122 and the second outlet surface 124 have the first outlet ports 126 and the second outlet ports 130 oriented in different directions toward the outside of the casing 26. In the structure, for example, in the case where any of the first outlet ports 126 is selected, and the outer cable 142 containing the power cable 79 is taken out of the first outlet port 126 to the outside of the casing 26, the first outlet port 126 is inclined toward the left side plate 108b with respect to the outside.

Therefore, after the outer cable 142 protruding from the first outlet port 126 is curved at a relatively small angle, the outer cable 142 can extend in parallel to the outer surface 26a of the casing 26. That is, it is sufficient that the outer surface 26a of the casing 26 is spaced from the wall surface 102 by a distance H1.

In the case where no cable outlet 112 is provided and the outer cable 142 protrudes from the back plate 106b of the casing 26 at the right angle, after this outer cable 142 is curved at a relatively large angle, the outer cable 142 extends in parallel with the outer surface 26a. In the structure, the distance H2 between the casing 26 and the wall surface 102 needs to be larger than the distance H1. Therefore, a considerably large space is formed wastefully in comparison with the case of the first embodiment (distance H1 < distance H2).

Further, in the first embodiment, for example, depending on the environment of providing the outer cable 142, the second outlet port 130 which is oriented in a direction different from that of the first outlet port 126 can be selected (see two-dot chain line in FIG. 2).

Thus, in the first embodiment, the casing 26 can be provided efficiently along the wall surface. With simple and structure, the layout for providing the power cable 79 can be determined freely. Accordingly, it becomes possible to provide the casing 26 in a small space suitably.

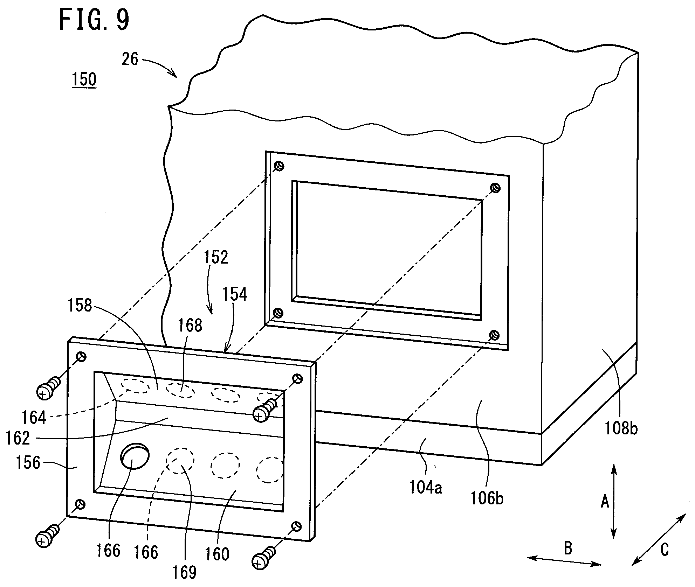

FIG. 9 is a perspective view showing a fuel cell system 150 according to a second embodiment of the present invention, as viewed from a back surface side.

The constituent elements that are identical to those of the fuel cell system 10 according to the first embodiment are labeled with the same reference numerals, and descriptions thereof will be omitted. Further, also in third to seventh embodiments as described later, the constituent elements that are identical to those of the fuel cell system 10 according to the first embodiment are labeled with the same reference numerals, and descriptions thereof will be omitted.

In the fuel cell system 150, a cable outlet 152 is provided on the back surface side (back plate 106b) of the casing 26. As in the case of the cable outlet 112 of the first embodiment, the cable outlet 152 has a cable outlet panel 154, and a first outlet surface 158 and a second outlet surface 160 are formed integrally with the inner portion of a flat attachment plate 156 of the cable outlet panel 154.

The first outlet surface 158 and the second outlet surface 160 are bent inward of the casing 26 to form a recess. A predetermined angle is formed at a horizontal borderline 162 between the first outlet surface 158 and the second outlet surface 160. The first outlet surface 158 and the second outlet surface 160 have a V-shape in a side view of the casing 26.

A predetermined number of first outlet ports 164 are formed in the first outlet surface 158, and a predetermined number of second outlet ports 166 are formed in the second outlet surface 160. The first outlet ports 164 are closed by cover plates 168, respectively, and the cover plates 168 can be removed to open the first outlet ports 164. The second outlet ports 166 are closed by cover plates 169, respectively, and the cover plates 169 can be removed to open the second outlet ports 166.

In the second embodiment, when an outer cable is taken out of the first outlet port 164 to the outside, the outer cable tends to be curved downward in the vertical direction easily.

Further, when the outer cable is taken out of the second outlet port 166, the outer cable can be curved upward easily. Therefore, the same advantages as in the case of the first embodiment are obtained. For example, the outer cable can be taken out vertically requiring only a small space, and the layout for providing the casing 26 can be determined freely.

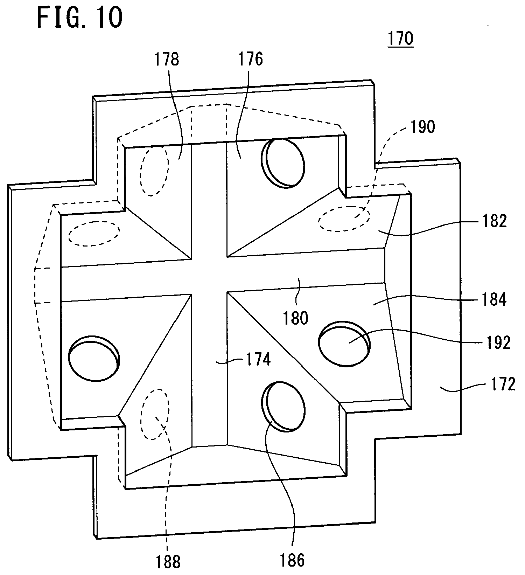

FIG. 10 is a front view showing a cable outlet panel 170 of a fuel cell system according to a third embodiment of the present invention.

The cable outlet panel 170 has a first outlet surface 176 and a second outlet surface 178, and a first outlet surface 182 and a second outlet surface 184 in a flat attachment plate 172. A predetermined angle is formed at a vertical borderline 174 between the first outlet surface 176 and the second outlet surface 178, and a predetermined angle is formed at a horizontal borderline 180 between the first outlet surface 182 and the second outlet surface 184.

The first outlet surface 176 and the second outlet surface 178 are bent inward of the casing to form a recess, and have a V-shape in a plan view of the casing. The first outlet surface 182 and the second outlet surface 184 are bent inward of the casing to form a recess, and have a V-shape in a side view of the casing.

A plurality of first outlet ports 186 are arranged vertically in the first outlet surface 176, and a plurality of second outlet ports 188 are arranged vertically in the second outlet surface 178. A plurality of first outlet ports 190 are arranged horizontally in the first outlet surface 182, and a plurality of second outlet ports 192 are arranged horizontally in the second outlet surface 184.

In the third embodiment, by selecting any of the first outlet ports 186 and the second outlet ports 188 for inserting the outer cable, the outer cable can be taken out in a lateral direction requiring only a small space. Further, by selecting any of the first outlet ports 190 and the second outlet ports 192 for inserting the outer cable, the outer cable can be taken out in a vertical direction requiring only a small space. Accordingly, the same advantages as in the case of the first and second embodiments are obtained. For example, the layout for providing the casing can be determined freely.

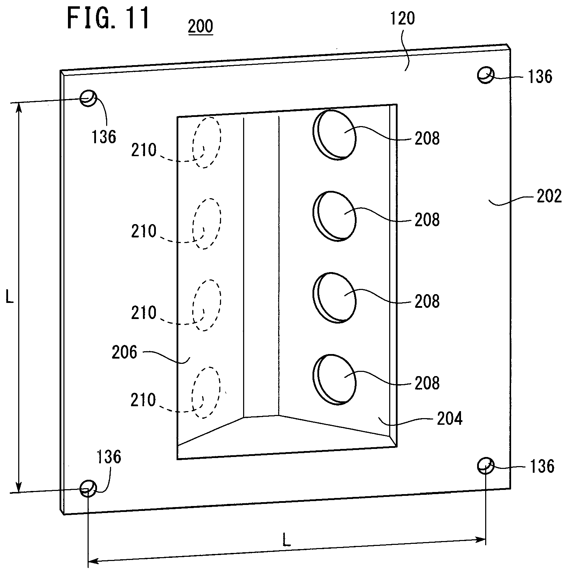

FIG. 11 is a front view showing a cable outlet panel 200 of a fuel cell system according to a fourth embodiment of the present invention.

The cable outlet panel 200 includes a square attachment plate 202, and holes 136 for inserting screws are formed adjacent to four corners of the attachment plate 202. The intervals L between the adjacent holes 136 are the same.

The attachment plate 202 can be attached to a casing (not shown) in an orientation shown in FIG. 11 (first attachment position) and an orientation shifted by 90° from this orientation (second attachment position). A first outlet surface 204 and a second outlet surface 206 are formed in the attachment plate 202. The first outlet surface 204 and the second outlet surface 206 are bent inward of the casing to form a recess. A plurality of first outlet ports 208 are formed in the first outlet surface 204, and a plurality of second outlet ports 210 are formed in the second outlet surface 206.

The cable outlet panel 200 is attached to the casing at the first attachment position shown in FIG. 11. Further, the cable outlet panel 200 can be attached to the casing at the second attachment position shifted by 90° from this first attachment position.

Therefore, at the first attachment position, the cable can be attached to the casing in the lateral direction requiring only a small space, and at the second attachment position, the cable can be taken out of the casing in the vertical direction requiring only a small space. Thus, with simple and economical structure, the layout for providing the casing can be determined freely.

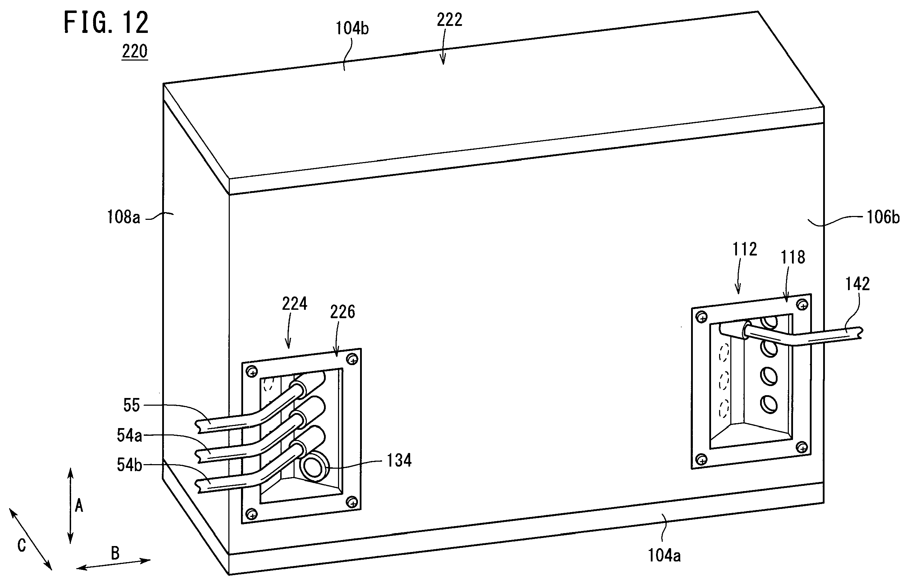

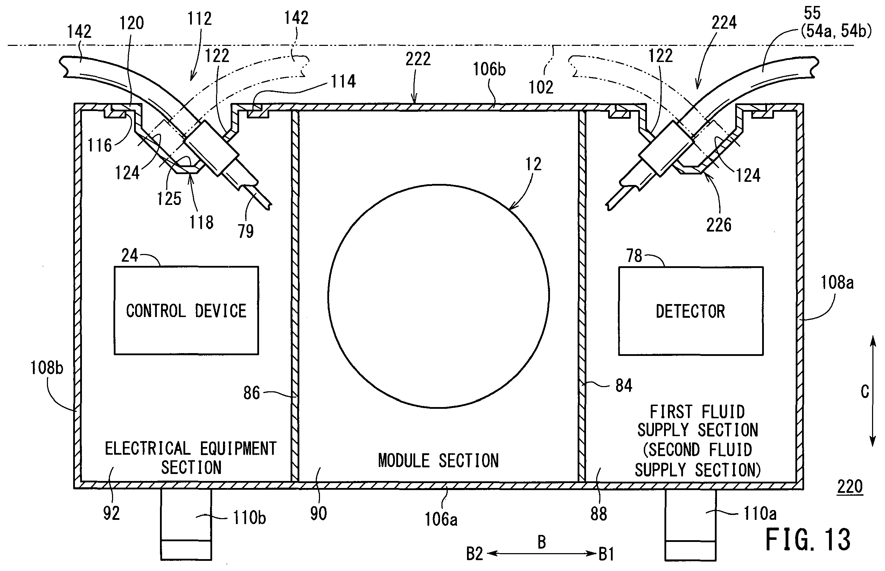

As shown in FIGS. 12 and 13, a fuel cell system 220 according to a fifth embodiment includes a casing 222.

On the back surface side of the casing 222 (back plate 106b side), a cable outlet 112 is provided adjacent to the left side plate 108b, and a pipe outlet 224 is provided adjacent to the right side plate 108a. Though the cable outlet 112 includes the cable outlet panel 118, the present invention is not limited in this respect. The cable outlet panels 154, 170, and 200 used in the second to fourth embodiments may be used. Also in sixth and seventh embodiments described later, the cable outlet panels 154, 170, and 200 used in the second to fourth embodiments may be used.

A pipe outlet panel 226 is provided in the pipe outlet 224. The pipe outlet panel 226 has the same structure as the cable outlet panel 118. The constituent elements that are identical to those of the cable outlet panel 118 are labeled with the same reference numerals, and descriptions thereof will be omitted. The pipe outlet panel 226 may not have the same structure as the cable outlet panel 118. Alternatively, the pipe outlet panel 226 may have the same structure as any of the cable outlet panels 154, 170, and 200.

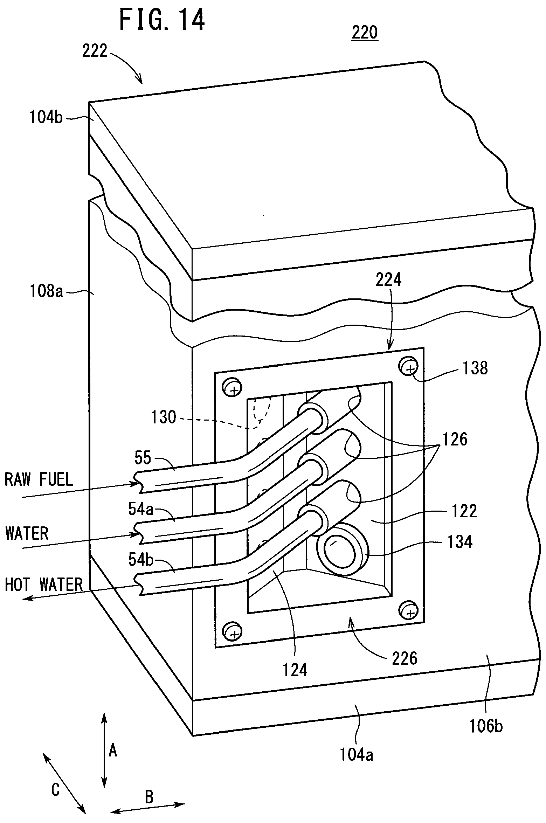

As shown in FIG. 14, the raw fuel pipe 55, the coolant supply pipe 54a, and the coolant discharge pipe 54b are inserted into three first outlet ports 126 formed in a first outlet surface 122 of the pipe outlet panel 226.

In the fifth embodiment, as shown in FIGS. 13 and 14, in addition to the raw fuel pipe 55, the coolant supply pipe 54a and the coolant discharge pipe 54b protrude from the first outlet port 126 to the outside of the casing 222 with inclination. In the structure, the raw fuel pipe 55, the coolant supply pipe 54a, and the coolant discharge pipe 54b can be taken out of the casing 222 toward the right side (in a direction indicated by an arrow B1 in FIG. 13) requiring only a small space. Thus, the casing 222 can be positioned as closely as possible to the wall surface 102.

Further, the raw fuel pipe 55, the coolant supply pipe 54a, and the coolant discharge pipe 54b can be provided at the second outlet ports 130. Thus, the raw fuel pipe 55, the coolant supply pipe 54a, and the coolant discharge pipe 54b can be taken out of the casing 222 toward the left side (in a direction indicated by an arrow B2 in FIG. 13) requiring only a small space. Thus, the layout for providing the casing 222 can be determined freely.

Further, by applying the second to fourth embodiments to the pipe outlet 224, the raw fuel pipe 55, the coolant supply pipe 54a, and the coolant discharge pipe 54b can be taken out of the casing in the vertical direction as well as the lateral direction requiring only a small space. Thus, the layout for providing the casing 222 can be determined even more freely.

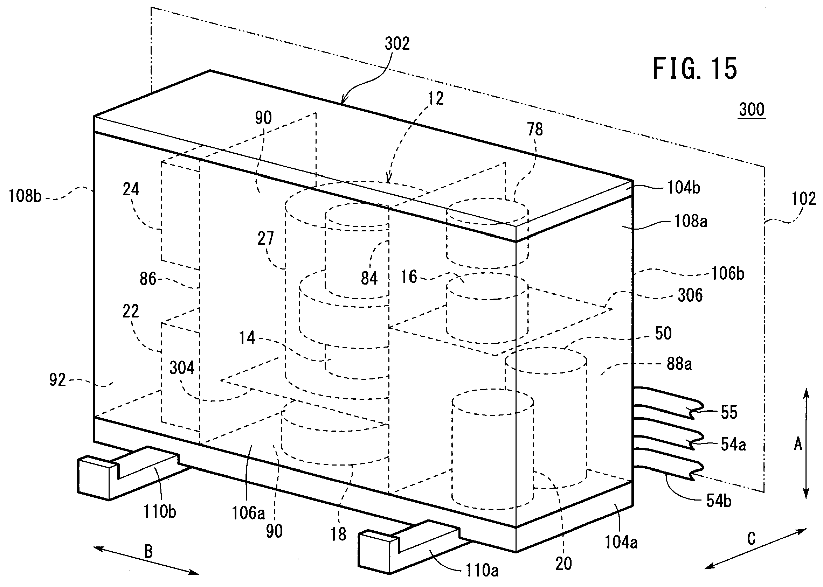

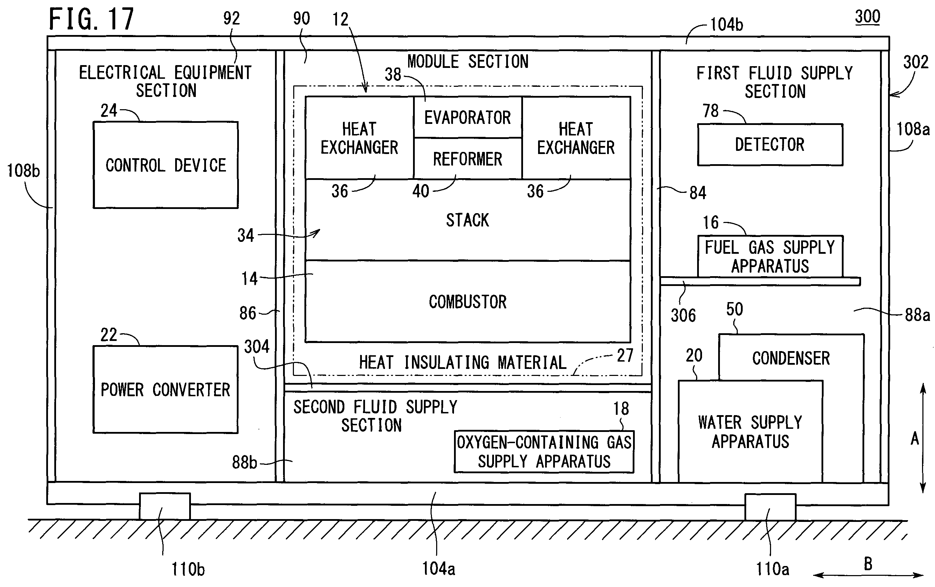

As shown in FIGS. 15 to 17, a fuel cell system 300 according to a sixth embodiment includes a casing 302.

The space in the casing 302 is divided into a first fluid supply section 88a, a module section 90, and an electrical equipment section 92 by a first vertical partition plate 84 and a second vertical partition plate 86. Further, the module section 90 is interposed between the first fluid supply section 88a and the electrical equipment section 92. A second fluid supply section 88b is formed below the module section 90 by a lateral partition plate 304.

The water supply apparatus 20, the condenser 50, the fuel gas supply apparatus 16, and the detector 78 are disposed in the first fluid supply section 88a. The water supply apparatus 20 is placed at the bottom of the first fluid supply section 88a, and the detector 78 is provided above the fuel gas supply apparatus 16. The fuel gas supply apparatus 16 is held on a table 306 in the first fluid supply section 88a. The oxygen-containing gas supply apparatus 18 is disposed in the second fluid supply section 88b.

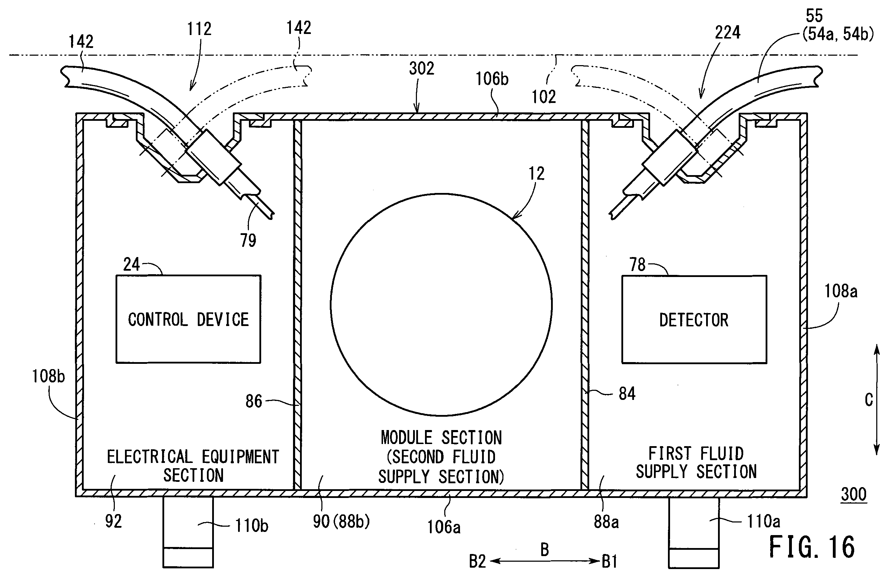

As shown in FIG. 16, on the back surface side of the casing 302 (back plate 106b side), the cable outlet 112 is provided adjacent to the left side plate 108b, and the pipe outlet 224 is provided adjacent to the right side plate 108a.

In the sixth embodiment, as in the case of the fifth embodiment, the power cable 79 can be taken out of the casing 302 toward the left or the right side in the lateral direction requiring only a small space. Further, the raw fuel pipe 55, the coolant supply pipe 54a, and the coolant discharge pipe 54b can be taken out of the casing 302 in the lateral direction requiring only a small space. Thus, the layout for providing the casing 302 can be determined freely.

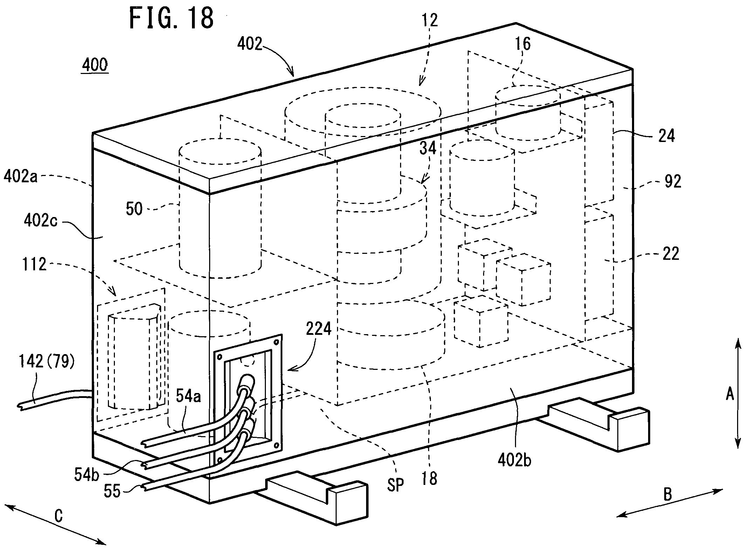

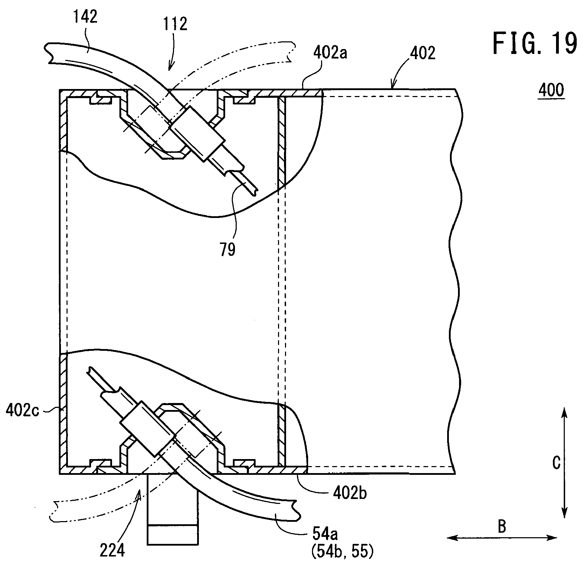

As shown in FIGS. 18 and 19, a fuel cell system 400 according to a seventh embodiment of the present invention includes a casing 402.

As shown in FIG. 19, a cable outlet 112 is provided on one surface (front surface or back surface) 402a of the casing 402, adjacent to one side surface (left side or right side) 402c opposite to the electrical equipment section 92. A pipe outlet 224 is provided on the other surface (back surface or front surface) 402b of the casing 402, adjacent to the one side surface 402c.

A space SP is provided at the bottom in the casing 402 for providing the raw fuel pipe 55 from the pipe outlet 224 toward the other side surface closer to the electrical equipment section 92. A power cable 79 from the cable outlet 112 to the electrical equipment section 92 is also provided in this space SP.

In the seventh embodiment, the same advantages as in the case of the first to sixth embodiments are obtained. Further, the cable outlet 112 and the pipe outlet 224 are provided adjacent to the one side surface 402c. In the structure, it becomes much easier to arrange the cables and the pipes in a limited space efficiently.

While the invention has been particularly shown and described with reference to preferred embodiments, it will be understood that variations and modifications can be effected thereto by those skilled in the art without departing from the scope of the invention as defined by the appended claims.

## Claims

1. A fuel cell system comprising:
a fuel cell module (12) for generating electrical power by electrochemical reactions of a fuel gas and an oxygen-containing gas;
a fuel gas supply apparatus (16) for supplying the fuel gas to the fuel cell module (12);
an oxygen-containing gas supply apparatus (18) for supplying the oxygen-containing gas to the fuel cell module (12);
a water supply apparatus (20) for supplying water to the fuel cell module (12);
a power converter (22) for converting direct current power generated in the fuel cell module (12) to electrical power according to requirements specification;
a control device (24) for controlling an amount of electrical power generated in the fuel cell module (12); and
a casing (26) containing the fuel cell module (12), the fuel gas supply apparatus (16), the oxygen-containing gas supply apparatus (18), the water supply apparatus (20), the power converter (22), and the control device (24),
wherein the casing (26) has at least a first outlet surface (122) and a second outlet surface (124) which are bent inward from an outer surface of the casing (26) to form a recess such that a predetermined angle is formed at a borderline between the first outlet surface (122) and the second outlet surface (124); and
the first outlet surface (122) and the second outlet surface (124) have a first outlet port (126) and a second outlet port (130) for allowing a power cable (79) for supplying electrical power according to requirements specification to outside or a fuel gas pipe (55) for supplying the fuel gas to the fuel gas supply apparatus (16) to protrude toward outside of the casing (26).

2. The fuel cell system according to claim 1, wherein the casing (222) includes:
a cable outlet (112) having the first outlet surface (122) and the second outlet surface (124) for allowing the power cable (79) to protrude from the casing (222); and
a pipe outlet (224) having the first outlet surface (122) and the second outlet surface (124) for allowing pipes including the fuel gas pipe (55) to protrude from the casing (222).

3. The fuel cell system according to claim 1 or 2, wherein the first outlet surface (122) and the second outlet surface (124) have a V-shape in a plan view of the casing (26).

4. The fuel cell system according to claim 1, wherein the first outlet surface (158) and the second outlet surface (160) have a V-shape in a side view of the casing (26).

5. The fuel cell system according to claim 1, wherein the first outlet surface (176, 182) and the second outlet surface (178, 184) have a V-shape in a plan view the casing (26), and have a V-shape in a side view of the casing (26).

6. The fuel cell system according to claim 1, wherein the first outlet surface (204) and the second outlet surface (206) are attached selectively at a first attachment position where the first outlet surface (204) and the second outlet surface (206) have a V-shape in a plan view of the casing (26) and at a second attachment position where the first outlet surface (204) and the second outlet surface (206) have a V-shape in a side view of the casing (26).

## Patentansprüche

1. Brennstoffzellensystem, welches aufweist:
ein Brennstoffzellenmodul (12) zum Erzeugen von elektrischer Energie durch elektrochemische Reaktionen von Brenngas und sauerstoffhaltigem Gas;
eine Brenngaszuführvorrichtung (16) zum Zuführen des Brenngases zu dem Brennstoffzellenmodul (12);
eine Sauerstoffhaltiges-Gas-Zuführvorrichtung (18) zum Zuführen des sauerstoffhaltigen Gases zu dem Brennstoffzellenmodul (12);
eine Wasserzuführvorrichtung (20) zum Zuführen von Wasser zu dem Brennstoffzellenmodul (12);
einen Energiewandler (22) zum Umwandeln der im Brennstoffzellenmodul (12) erzeugten Gleichstromenergie in Spezifikationsanforderungen entsprechender elektrischer Energie;
eine Steuervorrichtung (24) zum Steuern/Regeln einer Menge der im Brennstoffzellenmodul (12) erzeugten elektrischen Energie; und
ein Gehäuse (26), welches das Brennstoffzellenmodul (12), die Brenngaszuführvorrichtung (16), die Sauerstoffhaltiges-Gas-Zuführvorrichtung (18), die Wasserzuführvorrichtung (20), den Energiewandler (22) und die Steuervorrichtung (24) aufnimmt,
wobei das Gehäuse (26) zumindest eine erste Auslassoberfläche (122) und eine zweite Auslassoberfläche (124) aufweist, die von einer Außenoberfläche des Gehäuses (26) einwärts gebogen sind, um eine Vertiefung zu bilden, so dass an einer Grenzlinie zwischen der ersten Auslassoberfläche (122) und der zweiten Auslassoberfläche (124) ein vorbestimmter Winkel gebildet wird; und
die erste Auslassoberfläche (122) und die zweite Auslassoberfläche (124) eine erste Auslassöffnung (126) und eine zweite Auslassöffnung (130) aufweisen, um zu erlauben, dass ein Stromkabel (79) zum Zuführen von Spezifikationsanforderungen entsprechender elektrischer Energie zur Außenseite, oder ein Brenngasrohr (55) zum Zuführen des Brenngases zur Brenngaszuführvorrichtung (16) zur Außenseite des Gehäuses (26) vorsteht.

2. Das Brennstoffzellensystem nach Anspruch 1, wobei das Gehäuse (222) enthält:
einen Kabelauslass (112), der die erste Auslassoberfläche (122) und die zweite Auslassoberfläche (124) aufweist, um zu erlauben, dass das Stromkabel (79) von dem Gehäuse (222) vorsteht; und
einen Rohrauslass (224), der die erste Auslassoberfläche (122) und die zweite Auslassoberfläche (124) aufweist, um zu erlauben, dass Rohre, einschließlich des Brenngasrohrs (55), von dem Gehäuse (222) vorstehen.

3. Das Brennstoffzellensystem nach Anspruch 1 oder 2, wobei die erste Auslassoberfläche (122) und die zweite Auslassoberfläche (124) in Draufsicht des Gehäuses (26) eine V-Form haben.

4. Das Brennstoffzellensystem nach Anspruch 1, wobei die erste Auslassoberfläche (158) und die zweite Auslassoberfläche (160) in Seitenansicht des Gehäuses (26) eine V-Form haben.

5. Das Brennstoffzellensystem nach Anspruch 1, wobei die erste Auslassoberfläche (176, 182) und die zweite Auslassoberfläche (178, 184) in Draufsicht des Gehäuses (26) eine V-Form haben und in Seitenansicht des Gehäuses (26) eine V-Form haben.

6. Das Brennstoffzellensystem nach Anspruch 1, wobei die erste Auslassoberfläche (204) und die zweite Auslassoberfläche (206) selektiv an einer ersten Befestigungsposition, wo die erste Auslassoberfläche (204) und die zweite Auslassoberfläche (206) in Draufsicht des Gehäuses (26) eine V-Form haben, und an einer zweiten Befestigungsposition, wo die erste Auslassoberfläche (204) und die zweite Auslassoberfläche (206) in Seitenansicht des Gehäuses (26) eine V-Form haben, angebracht sind.

## Revendications

1. Système de piles à combustible comprenant :
un module de piles à combustible (12) pour générer de l'énergie électrique par réactions électrochimiques d'un gaz combustible et d'un gaz contenant de l'oxygène ;
un appareil d'alimentation en gaz combustible (16) pour alimenter en gaz combustible le module de piles à combustible (12) ;
un appareil d'alimentation en gaz contenant de l'oxygène (18) pour alimenter en gaz contenant de l'oxygène le module de piles à combustible (12) ;
un appareil d'alimentation en eau (20) pour alimenter en eau le module de piles à combustible (12) ;
un convertisseur d'énergie (22) pour convertir une énergie de courant continu générée dans le module de piles à combustible (12) en énergie électrique selon une spécification des exigences ;
un dispositif de contrôle (24) pour contrôler une quantité d'énergie électrique générée dans le module de piles à combustible (12) ; et
un boîtier (26) contenant le module de piles à combustible (12), l'appareil d'alimentation en gaz combustible (16), l'appareil d'alimentation en gaz contenant de l'oxygène (18), l'appareil d'alimentation en eau (20), le convertisseur d'énergie (22) et le dispositif de contrôle (24),
dans lequel le boîtier (26) a au moins une première surface de sortie (122) et une deuxième surface de sortie (124) qui sont courbées vers l'intérieur par rapport à une surface extérieure du boîtier (26) pour former un creux de telle sorte qu'un angle prédéterminé est formé au niveau d'une ligne de démarcation entre la première surface de sortie (122) et la deuxième surface de sortie (124) ; et
la première surface de sortie (122) et la deuxième surface de sortie (124) ayant un premier orifice de sortie (126) et un deuxième orifice de sortie (130) pour permettre à un câble d'alimentation (79) pour fournir de l'énergie électrique selon une spécification d'exigences vers l'extérieur ou à un tuyau de gaz combustible (55) pour fournir le gaz combustible à l'appareil d'alimentation en gaz combustible (16) de dépasser vers l'extérieur du boîtier (26).

2. Système de piles à combustible selon la revendication 1, dans lequel le boîtier (222) comprend :
une sortie de câble (112) ayant la première surface de sortie (122) et la deuxième surface de sortie (124) pour permettre au câble d'alimentation (79) de dépasser du boîtier (222) ; et
une sortie de tuyau (224) ayant la première surface de sortie (122) et la deuxième surface de sortie (124) pour permettre à des tuyaux comprenant le tuyau de gaz combustible (55) de dépasser du boîtier (222) .

3. Système de piles à combustible selon la revendication 1 ou 2, dans lequel la première surface de sortie (122) et la deuxième surface de sortie (124) ont une forme en V en vue en plan du boîtier (26).

4. Système de piles à combustible selon la revendication 1, dans lequel la première surface de sortie (158) et la deuxième surface de sortie (160) ont une forme en V en vue de côté du boîtier (26).

5. Système de piles à combustible selon la revendication 1, dans lequel la première surface de sortie (176, 182) et la deuxième surface de sortie (178, 184) ont une forme en V en vue en plan du boîtier (26), et ont une forme en V en vue de côté du boîtier (26).

6. Système de piles à combustible selon la revendication 1, dans lequel la première surface de sortie (204) et la deuxième surface de sortie (206) sont fixées sélectivement à une première position de fixation où la première surface de sortie (204) et la deuxième surface de sortie (206) ont une forme en V en vue en plan du boîtier (26) et à une deuxième position de fixation où la première surface de sortie (204) et la deuxième surface de sortie (206) ont une forme en V en vue de côté du boîtier (26).
